Europäisches Patentamt

European Patent Office

Office européen des brevets

(19)

(11) Numéro de publication: **0 062 570**
A1

(12) # DEMANDE DE BREVET EUROPEEN

(21) Numéro de dépôt: **82400545.8**

(22) Date de dépôt: **25.03.82**

(51) Int. Cl.³: **B 65 G 21/18**

(30) Priorité: **03.04.81 FR 8106789**

(43) Date de publication de la demande: **13.10.82**
**Bulletin 82/41**

(84) Etats contractants désignés: **DE GB IT SE**

(71) Demandeur: **FRIGOFRANCE S.A. Société Anonyme dite:, F-44340 Bouguenais (FR)**

(72) Inventeur: **Le Cann, Robert J., 50, rue Clément Bacheller, F-44400 Reze-les-Nantes (FR)**
Inventeur: **Fache, Jean-Paul R., North House, F-44400 Reze-les-Nantes (FR)**

(74) Mandataire: **Moulines, Pierre et al, Cabinet BEAU de LOMENIE 55, rue d'Amsterdam, F-75008 Paris (FR)**

(54) **Transporteur à bande sans fin décrivant un hélicoïde.**

(57)     Transporteur à bande sans fin (4) décrivant un hélicoïde, constitué d'un tapis transporteur (4) comportant du côté intérieur (9a) des entretoises qui déterminent le pas de l'hélicoïde et du côté extérieur (9) des organes reposant sur un moyen de guidage hélicoïdal (38).

     Le tapis (4) présente sur son bord intérieur une série de doigts (19) qui sont engagés sélectivement dans des rainures (21) verticales d'un moyen d'entraînement (22) de manière à guider le tapis (4) suivant un hélicoïde montant ou descendant.

     L'invention est utilisée pour réaliser un transporteur hélicoïdal.

EP 0 062 570 A1

## Transporteur à bande sans fin décrivant un hélicoïde

La présente invention a pour objet un transporteur à bande sans fin décrivant un hélicoïde.

Pour le transport de certains produits, au cours duquel ceux-ci sont soumis à un traitement particulier, il est connu d'utiliser des transporteurs constitués d'un tapis ou bande sans fin décrivant un hélicoïde.

Toutefois, pour certaines applications, les dispositifs actuellement connus ne donnent pas entière satisfaction ou ne peuvent être utilisés en raison notamment de leur configuration et de leur mode d'entraînement. Le transporteur suivant l'invention a principalement pour but d'obtenir un dispositif simple permettant de maintenir immergés des produits dans un liquide plus dense que ces produits.

Dans ce domaine, il peut être appliqué notamment au transport de produits alimentaires sous emballage étanche dans des saumures afin d'assurer leur congélation conformément au procédé ayant fait l'objet du brevet français 77.10002.

Suivant une autre application de l'invention, les produits transportés en continu sont soumis à un balayage d'air froid pour en assurer soit le refroidissement, soit la congélation ainsi qu'il est décrit dans le brevet français 77.13975.

Conformément à la présente invention, le tapis présente sur son bord intérieur une série de doigts qui sont engagés sélectivement dans des rainures verticales d'un moyen d'entraînement de manière à guider le tapis suivant un hélicoïde montant ou descendant.

Ce dispositif permet au moyen d'entretoises en forme de croix d'assurer à la fois l'entraînement hélicoïdal du tapis sans fin, l'espacement du côté intérieur entre les spires du tapis et le support de celui-ci à l'entrée et à la sortie du cabestan.

Ce dispositif permet également de simplifier l'entraînement par l'utilisation d'un simple tambour ou cabestan entraîné en rotation par un organe moteur et de remplacer avantageusement les ensembles de pignons habituels ou les moyens d'entraînement à friction connus.

D'autres caractéristiques et avantages de l'invention seront mieux compris à la lecture de la description qui va suivre d'un mode de réalisation et en se référant aux dessins annexés, sur lesquels :

- la figure 1 est une vue en perspective d'un mode de réalisation du transporteur suivant l'invention;

- la figure 2 est une vue en élévation du tambour central ou cabestan d'entraînement;

- la figure 3 est une vue en perspective du dispositif transporteur;

- la figure 4 est une vue en plan du tapis et des moyens d'entraînement;

- la figure 5 est une vue en élévation transversale et en coupe suivant suivant la ligne V V de la figure 4;

- la figure 6 est une vue en élévation latérale montrant les entretoises et le tambour;

- la figure 7 est une vue en élévation du tambour et des entretoises montées sur la chaîne du transporteur;

- la figure 8 est une vue en perspective d'une entretoise en forme de croix;

- la figure 9 est une vue en perspective du cabestan et des organes de support fixe en forme d'hélicoïde ;

- la figure 10 est une vue en plan de la sortie des organes d'entretoise du tambour ou cabestan;

- la figure 11 est une vue en élévation du transporteur à sa sortie du cabestan;

- la figure 12 est une vue en élévation et en coupe suivant la ligne XII XII de la figure 11;

- la figure 13 est une vue en élévation d'un pignon ou d'un tambour de guidage du transporteur et des éléments de rive;

- la figure 14 est une vue en élévation du transporteur muni de palettes pour l'entraînement de produits immergés;

- la figure 15 est une vue en plan du transporteur muni de palettes;

- la figure 16 est une vue en élévation de l'empilage de plusieurs spires.

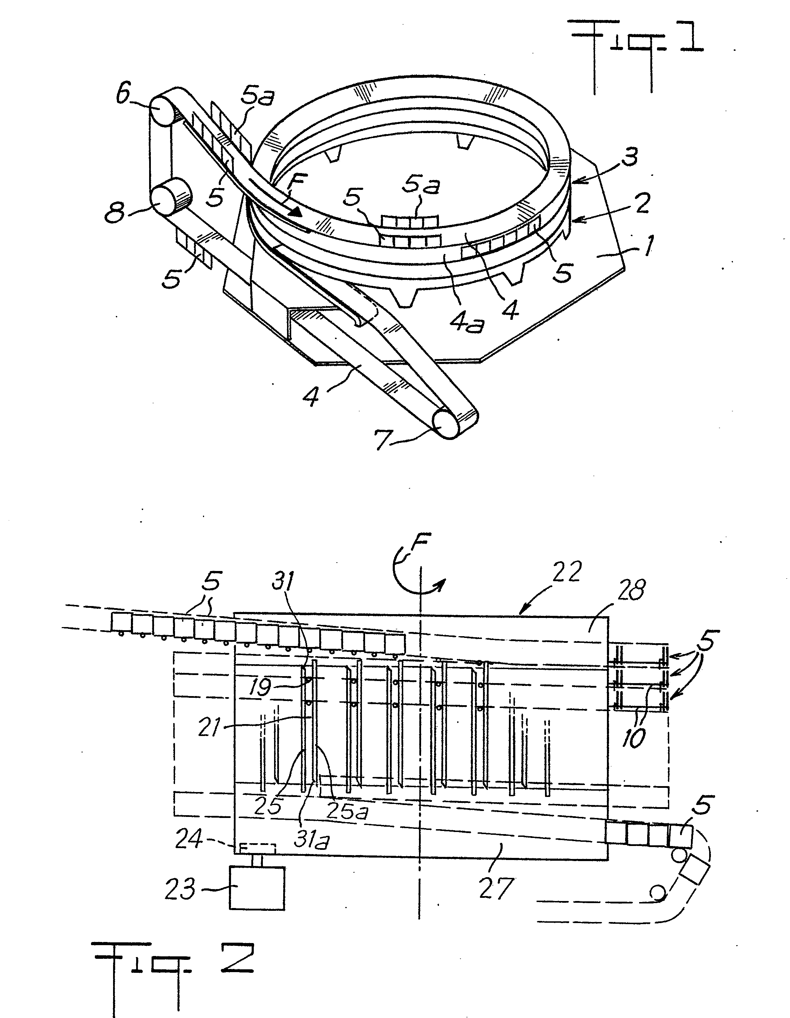

A la figure 1, on a représenté un mode de réalisation de transporteur suivant l'invention qui comprend une platine de base 1 sur laquelle est fixé un bâti inférieur 2 de support d'un empilage 3 constitué d'un tapis transporteur sans fin 4 décrivant un hélicoïde et qui comporte des éléments de rive verticaux 5, 5a.

Le tapis 4 est entraîné suivant la flèche F et il est guidé en dehors de l'empilage 3 par des pignons ou tambours 6, 7 et 8.

La tension du tapis est obtenue notamment par un moyen utilisant un vérin hydraulique agissant sur les pignons ou tambours 6, 7, 8 de renvoi et en utilisant un contrôle de la pression du fluide dans le vérin pour assurer une pression constante avec une valeur limite de sécurité.

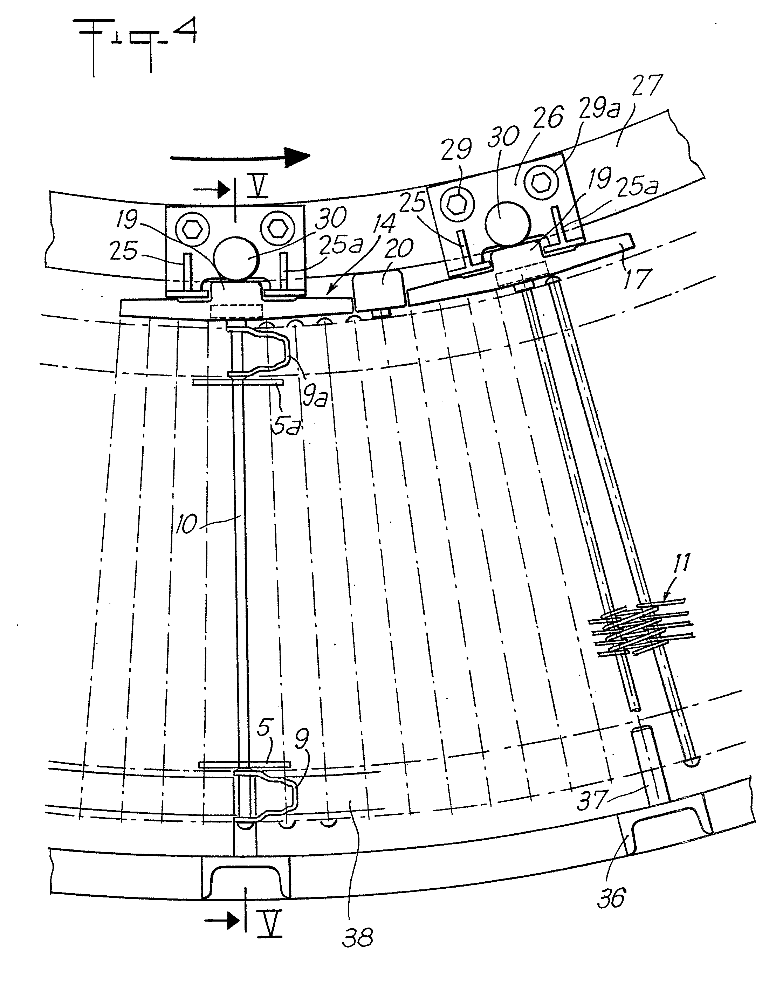

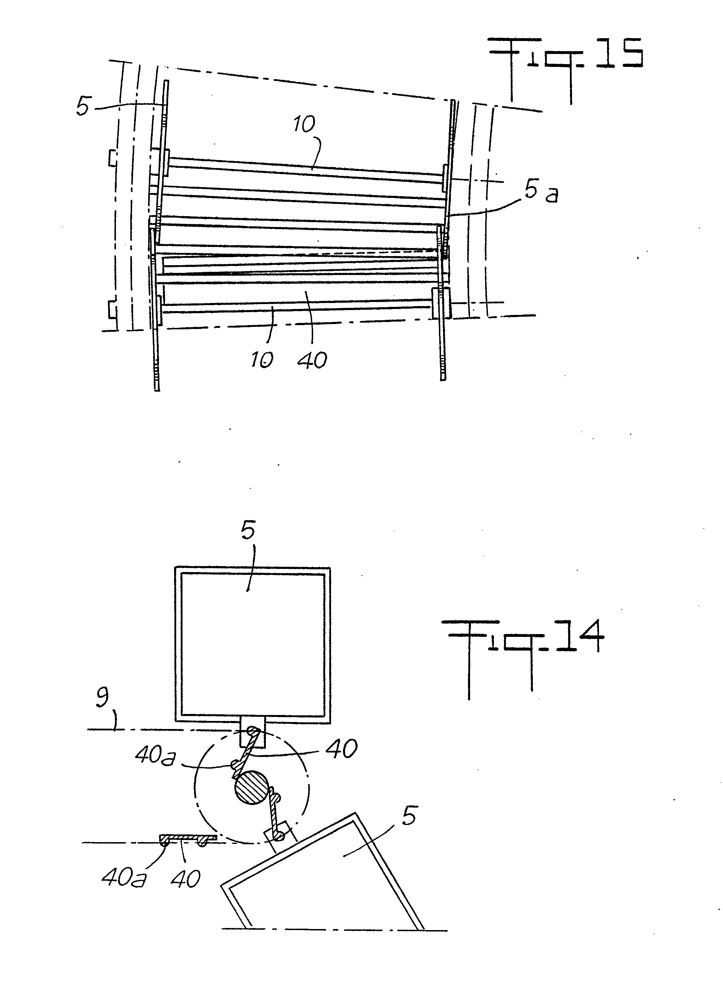

Le tapis 4 est constitué de deux chaînes (figures 4, 5, 13) 9, 9a reliées entre elles par des tiges 10 sur lesquelles est fixé un tapis ou revêtement à mailles articulées 11. De chaque côté du tapis sont montés sur les tiges 10 à recouvrement des éléments de rive 5, 5a qui sont constitués par des plaques pleines ou ajourées, lesdits éléments 5, 5a comportant dans leur partie médiane inférieure des pattes 12 qui présentent des trous oblongs 13 dans lesquels sont engagées les extrémités des tiges 10 (figure 13). Les trous oblongs 13 sont destinés à permettre un dégagement des supports des éléments de rive 5, 5a pendant leur passage sur les pignons 6, 7 et 8.

A l'extrémité de certaines tiges 10 situées du côté intérieur de l'hélicoïde sont fixés des entretoises 14 qui présentent des ouvertures 15, 15a dans lesquelles est montée une goupille 16 solidaire de la tige 10 afin de limiter la rotation des entretoises sur les tiges 10 (figure 7).

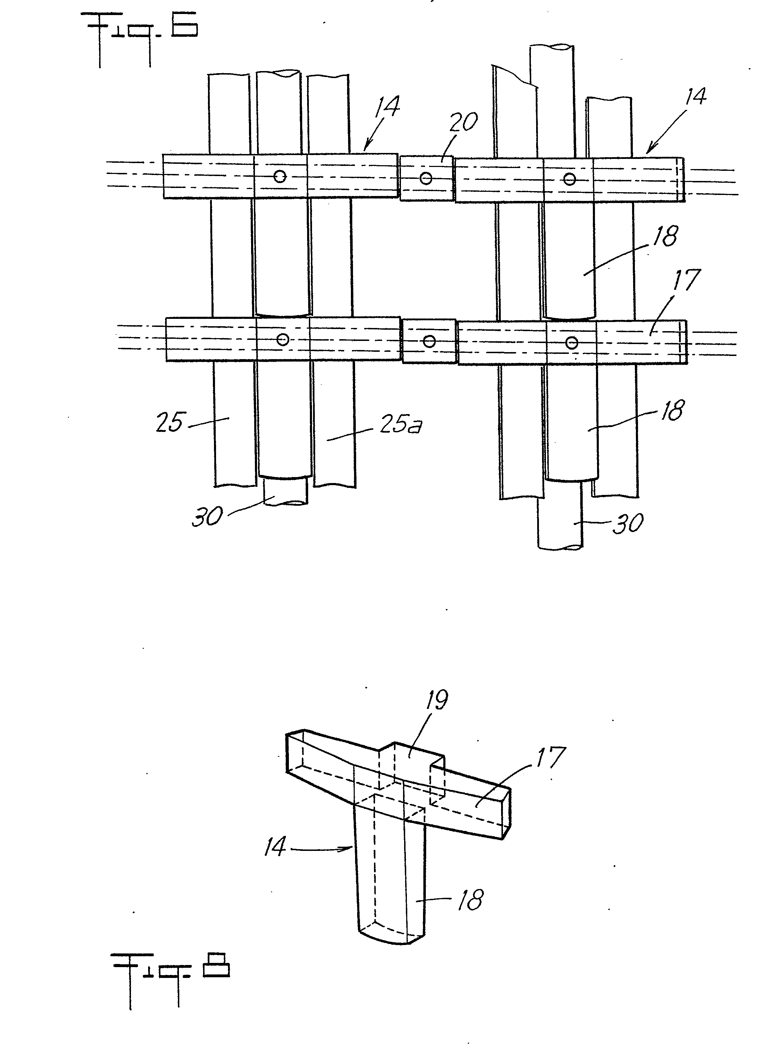

Chaque entretoise 14 (figure 8) en forme de croix comporte une barre horizontale 17 qui se prolonge verticalement dans sa partie centrale par une barre verticale 18 et qui présente sur sa face dirigée vers l'intérieur de l'hélicoïde un doigt 19.

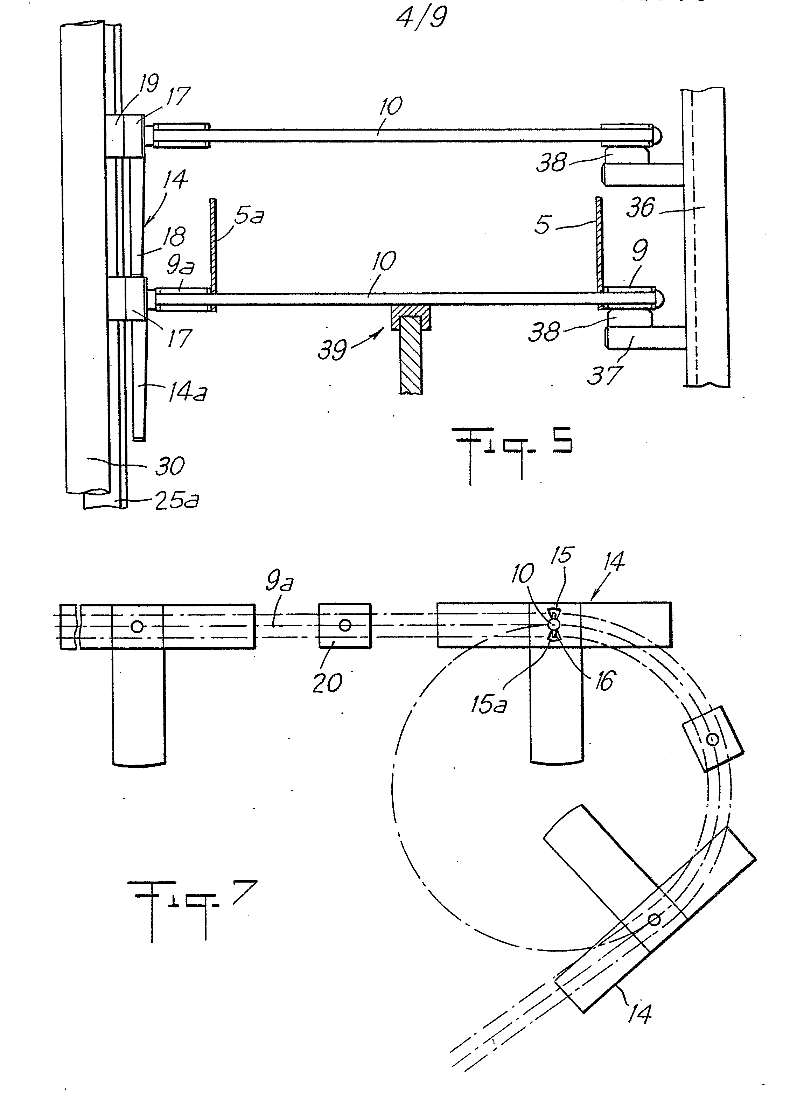

Comme représenté aux figures 5 et 6, les entretoises 14 sont empilées l'une sur l'autre de telle sorte que la barre verticale 18 de l'entretoise 14 repose par sa partie inférieure sur la partie supérieure de la barre horizontale 17 de l'entretoise 14a de la spire inférieure.

Entre les barres horizontales de deux entretoises adjacentes sont disposés des éléments intermédiaires 20 qui sont fixés à l'extrémité intérieure d'une barre 10 et qui permettent d'avoir un rayon convenable des barres horizontales 17 des entretoises. Les doigts 19 sont engagés sélectivement dans des rainures verticales 21 solidaires d'un moyen d'entraînement de manière à guider le tapis 4 suivant un hélicoïde montant ou descendant.

Le moyen d'entraînement est constitué d'un tambour central ou cabestan 22 (figures 2) disposé dans la partie centrale laissée libre par l'empilage hélicoïdal du transporteur, ledit cabestan étant entraîné en rotation par un organe moteur 23 et un organe de transmission 24.

Le cabestan ou tambour central 22 est constitué de viroles inférieure et supérieure 27, 28 reliées entre elles (figures 2, 3, 4, 5, 6) par des tiges profilées en forme de T 25, 25a délimitant entre elles les rainures verticales 21 dans lesquelles sont engagés les doigts 19 solidaires des entretoises. Les tiges 25, 25a sont fixées à leurs extrémités sur des plaques 26 qui sont elles-mêmes fixées sur les viroles inférieure et supérieure 27, 28 au moyen de vis 29, 29a. Sur les plaques 26 sont également fixées des piges 30 verticales de guidage contre lesquelles viennent en appui les extrémités des doigts 19 et qui délimitent le fond des rainures 21. Ainsi qu'il est visible à la figure 2, le profilé 25 est prolongé par une queue à face inclinée 31 à sa partie inférieure et le profilé 25a par une queue 31a à sa partie supérieure. Cette queue de rainure 31, 31a est destinée à faciliter l'engagement et le dégagement des doigts 19 dans les rainures 21, de même que les viroles 27 et 28 du cabestan sont destinées à provoquer le préenroulement et l'échappement du tapis.

Le dispositif fonctionne de la manière suivante : le cabestan 22 étant entraîné en rotation suivant la flèche F, les doigts 19 s'engagent dans les rainures 21 à leur partie supérieure et lesdits doigts 19 sont ainsi rendus solidaires du tambour pendant leur déplacement vertical dans lesdites rainures 21. Lorsque les doigts 19 parviennent à la partie inférieure de la rainure 21, ils s'échappent de celle-ci après avoir effectué un déplacement hélicoïdal au cours duquel ils assurent l'entraînement du tapis 4 dont ils sont solidaires.

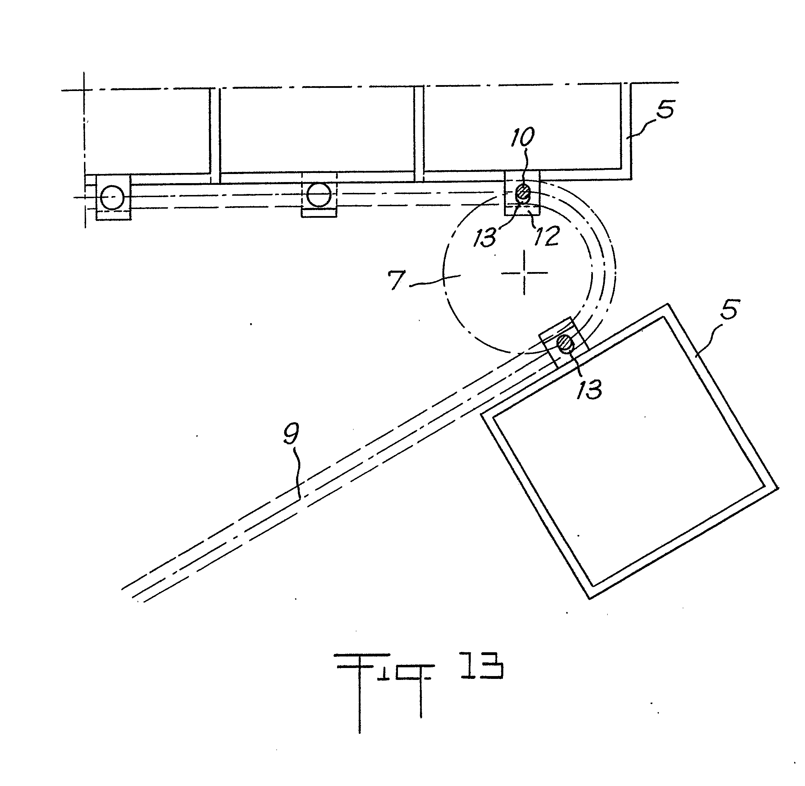

A la partie inférieure et autour du cabestan 22 est disposé un organe porteur 32 (figures 9, 10, 11, 12) qui est fixe et repose sur la platine de base 1, ledit organe présentant à sa partie supérieure un chemin hélicoïdal 33 s'étendant sur au moins un tour complet.

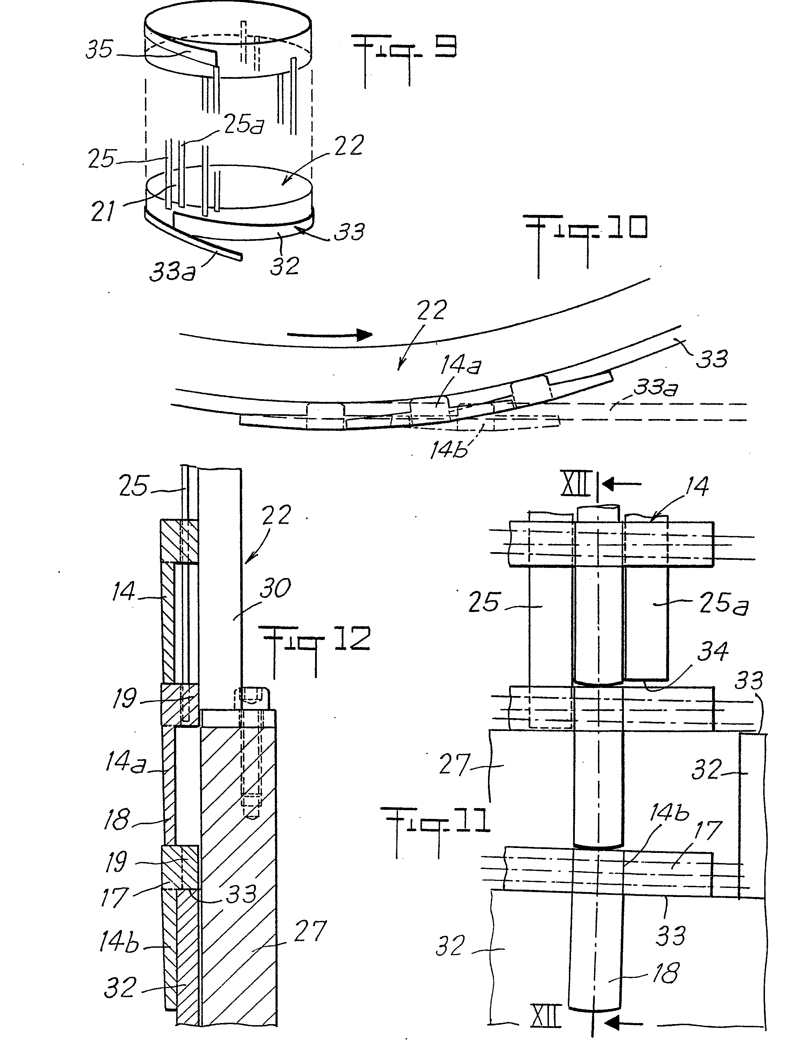

Lorsque l'entretoise 14a parvient à la base du cabestan 22 (figures 10, 11, 12) son doigt 19 échappe à la tige 25a qui est interrompue en 34 pour laisser le passage audit doigt 19. A ce moment la barre horizontale 17 et le doigt 19 viennent en appui sur la face hélicoïdale 33 de l'organe de support 32 et ladite entretoise 14a suit le chemin hélicoïdal 33 sur un tour guidé ainsi jusqu'à la sortie 33a où elle occupe la position 14b et à partir de laquelle le tapis est guidé par d'autres moyens connus non représentés au dessin.

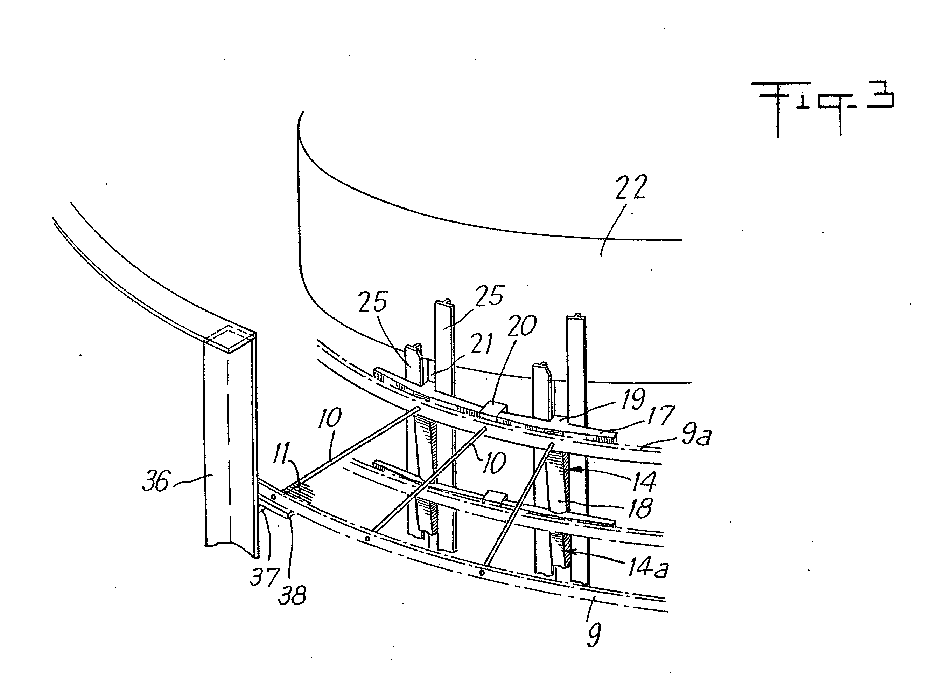

A l'entrée du tapis sur le cabestan (Fig. 9) il est prévu à la partie supérieure du cabestan 22 et autour de celui-ci un organe de support 35 fixe présentant un chemin hélicoïdal inverse du chemin 33 de sortie, ledit organe de support étant fixé sur un châssis extérieur fixe 36 (figure 3) L'organe de support 35 a pour but d'amener les entretoises 14 en regard des tiges 25, 25a pour l'engagement du doigt 19 dans la rainure 21. Le châssis extérieur fixe 36 comporte des organes de support 37 disposés suivant une ligne hélicoïdale et sur lesquels est fixée une bande hélicoïdale 38 supportant la chaîne 9 située du côté extérieur au tapis 4. Le tapis est ainsi guidé intérieurement par les entretoises 14 qui coopèrent avec le cabestan 22 et extérieurement au moyen de la bande hélicoïdale 38 sur laquelle se déplace la chaîne 9.

Pour les largeurs importantes de tapis, il est nécessaire de prévoir des supports complémentaires constitués notamment d'un rail central 39 contre lequel est en appui le tapis 4.

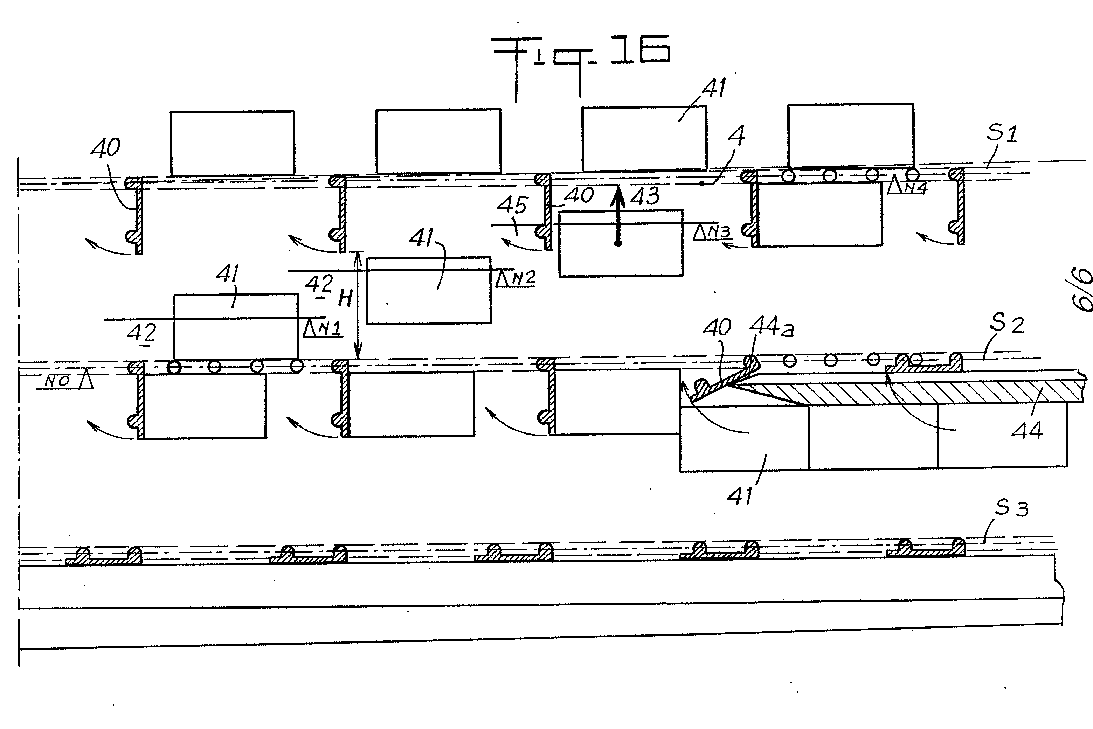

Aux figures 14 et 15, on a représenté le tapis transporteur 4 sous la face inférieure duquel sont montées de façon articulée et espacée des palettes en matière élastique 40, qui se présente sous la forme d'une bande comportant des nervures 40a. Chaque palette 40 est montée sur une barre 10 du tapis 4.

Le dispositif fonctionne de la manière suivante.

Au niveau de la première spire $S_1$ du tapis 4, (figure 16), les produits ou éléments qui sont destinés à subir une opération de réfrigération dans la saumure reposent sur la partie supérieure du tapis 4, alors qu'à sa partie inférieure le tapis comporte des palettes 40 qui s'étendent verticalement sous le tapis. Le tapis de la deuxième spire et les éléments de rive délimitent un canal incliné dans lequel est disposé un liquide de refroidissement, notamment une saumure 42 pour la réfrigération des produits ou éléments 41. Le niveau de la saumure varie du fait de l'inclinaison de la spire du niveau NO au niveau N4, de telle sorte que, lorsque le produit atteint la deuxième spire $S_2$, le produit 41 passe de la position au niveau N1 où il commence à être immergé aux positions N2 et N3 où il flotte dans la saumure 42 du fait qu'il est soumis à la poussée d'Archimède suivant la flèche 43. Lorsqu'il atteint le niveau N3 et étant donné la hauteur H de la palette au-dessus de la surface supérieure du tapis de la spire $S_2$, le produit 41 est entraîné par l'une des palettes 40 contre laquelle il vient en appui. Ensuite, le produit 41 s'établit dans le liquide de refroidissement ou saumure au niveau maximal N4 et il reste en immersion totale dans cette position dans la spire $S_2$ où il est entièrement noyé et soumis à la poussée d'Archimède. En fin de course, les palettes 40 sont repliées horizontalement au moyen d'une plaque 44 par une extrémité inclinée 44a de celle-ci, de telle sorte que, après escamotage des palettes, les produits ou éléments 41 sont évacués par gravité vers la surface du bain de liquide de refroidissement ou saumure.

Bien entendu, la description n'est pas limitative et l'homme de l'art pourra y apporter des modifications sans sortir pour cela du domaine de l'invention.

REVENDICATIONS

1. Transporteur à bande sans fin décrivant un hélicoïde, constitué d'un tapis transporteur comportant du côté intérieur des entretoises qui déterminent le pas de l'hélicoïde et du côté extérieur des organes reposant sur un moyen de guidage hélicoïdal, caractérisé en ce que les entretoises (14) du tapis (4) présentent sur leur bord intérieur une série de doigts (19) qui sont engagés sélectibement dans des rainures (21) verticales d'un tambour d'entraînement central (22) de manière à guider le tapis (4) suivant un hélicoïde montant ou descendant.

2. Transporteur suivant la revendication 1, caractérisé en ce que le moyen d'entraînement est constitué d'un cabestan ou tambour central (22) entraîné en rotation et constitué de deux viroles (27, 28) supérieure et inférieure reliées entre elles par des tiges profilées (25, 25a) délimitant des rainures verticales (21) dans lesquelles sont engagés les doigts (19) solidaires du tapis (4) qui sont en appui contre des piges (30) de guidage verticales délimitant le fond des rainures (21), l'une desdites tiges (25, 25a) profilées étant prolongée verticalement vers le bas et l'autre vers le haut et les viroles (27, 28) présentant des parois lisses pour le préenroulement et l'échappement du tapis (4).

3. Transporteur suivant les revendications 1 ou 2, caractérisé en ce que autour des parties inférieure et supérieure du cabestan (22) sont disposés des organes fixes (32, 35) de support des entretoises (14) présentant un profil hélicoïdal, lesdits organes (32,35) assurant l'entrée et la sortie des doigts (19) des entretoises (14).

4. Transporteur suivant les revendications 1 ou 3, dans lequel la bande transporteuse est constituée de deux chaînes reliées entre elles par des tiges sur lesquelles est fixé un tapis à mailles articulées, caractérisé en ce que, à l'une des extrémités des tiges (10) du côté intérieur, sont fixées les entretoises (14) qui présentent la forme de croix et comportent, d'une part, une barre verticale (18) en appui par sa partie inférieure contre la partie supérieure de l'entretoise de la spire inférieure et, d'autre part, une barre horizontale (17) susceptible de venir en appui contre les organes de support hélicoïdaux (32, 35) ladite barre horizontale (17) comportant un doigt (19) d'entraînement engagé dans une rainure (21) du cabestan.

5. Transporteur suivant les revendications 1 ou 4, caractérisé en ce que, de chaque côté du tapis, sont montés à recouvrement des éléments de rive 5, 5a qui comportent des pattes présentant des trous oblongs (13) dans lesquels sont engagées les extrémités des tiges de liaison (10) des chaînes.

6. Transporteur suivant la revendication 2, caractérisé en ce que les éléments de rive 5, 5a sont constitués par des plaques pleines.

7. Transporteur suivant la revendication 2, caractérisé en ce que les éléments de rive (5, 5a) sont constitués par des plaques ajourées.

8. Transporteur suivant la revendication 1, caractérisé en ce que le tapis (4) est prolongé en dehors de l'hélicoïde pour former une boucle qui est montée sur au moins trois pignons ou tambours (6, 7, 8) guidant les chaînes et qui sont montés en rotation libre sur des axes solidaires du bâti de support.

9. Transporteur suivant la revendication 1, caractérisé en ce que, sous la face inférieure du tapis (4) sont montées de façon articulée et espacée des palettes (40) en matière élastique pour l'entraînement du produit au moment de l'immersion dans un liquide de refroidissement et pour la libération du produit en fin de parcours.

10. Transporteur suivant la revendication 8, caractérisé en ce que la hauteur des palettes (40) est prédéterminée en fonction de l'entraînement du produit au moment de l'immersion.

11. Transporteur suivant la revendication 4, caractérisé en ce que sous le tapis il est prévu un rail central (39) contre lequel ledit tapis (4) est en appui.

Fig. 1

Fig. 2

Fig. 3

Fig-4

Fig. 5

Fig. 7

Fig. 6

14

20

14

18

17

18

25

25a

18

30

30

19

17

14

18

Fig. 8

0062570

Fig. 9

Fig. 10

Fig. 12

Fig. 11

Fig. 13

Fig. 15

Fig. 14

Fig. 16

0062570

Office européen
des brevets

**RAPPORT DE RECHERCHE EUROPEENNE**

Numéro de la demande

EP 82 40 0545

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl. ³) |
|---|---|---|---|
| X | DE - C - 698 360 (K. GLINKA)<br><br>* page 2, ligne 41 - page 3, ligne 9; figures * | 1-4 | B 65 G 21/18 |
| A | DE - C - 684 922 (BÜTTMER-WERKE AG)<br><br>* page 2, ligne 29 - page 3, ligne 4; figures * | 1,3,4 | |
| A | US - A - 3 133 798 (E. FELD)<br><br>* en entier * | 1,2,4 | |
| A | US - A - 2 093 270 (G. GLIMKA)<br><br>* page 2, colonne 1, ligne 6 - page 3, colonne 2, ligne 18; figures * | 1-4 | **DOMAINES TECHNIQUES RECHERCHES (Int. Cl. ³)**<br><br>B 65 G<br>F 25 D<br>F 26 B |
| A | FR - A - 2 220 442 (FRIGO SCANDIA)<br><br>* page 4, lignes 8-36; figures * | 5-8 | |
| A | FR - A - 2 063 070 (ROTHMANS OF PALL MALL CANADA)<br><br>* revendications 1-4; figures * | 1 | |

Le présent rapport de recherche a été établi pour toutes les revendications.

| Lieu de la recherche | Date d'achèvement de la recherche | Examinateur |
|---|---|---|
| LA HAYE | 05-07-1982 | VAN ROLLEGHEM |

CATEGORIE DES DOCUMENTS CITES

X : particulierement pertinent a lui seul
Y : particulierement pertinent en combinaison avec un autre document de la meme categorie
A : arriere-plan technologique
O : divulgation non-ecrite
P : document intercalaire

T : theorie ou principe à la base de l'invention
E : document de brevet anterieur, mais publié à la date de depot ou apres cette date
D : cite dans la demande
L : cite pour d autres raisons

& : membre de la meme famille, document correspondant

# 0062570

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| A | <u>DE - A - 2 544 916</u> (OMODERA)<br><br>* page 9, lignes 9-22; figures * | 11 | |
| | ------ | | |
| | | | **DOMAINES TECHNIQUES RECHERCHES** (Int. Cl.³) |

OEB Form 1503.2   06.78